# EUROPEAN PATENT SPECIFICATION

(11) **EP 1 349 357 B1**
(45) Date of publication and mention of the grant of the patent: **24.09.2008**
(21) Application number: 01271885.4
(22) Date of filing: 26.12.2001
(51) Int. Cl.: H04M 3/42, H04M 3/51

(54) **CALL CENTER SYSTEM**
ANRUFZENTRALENSYSTEM
SYSTEME DE CENTRE D'APPELS

(30) Priority: 26.12.2000 JP 2000404814
(43) Date of publication of application: 01.10.2003
(73) Proprietor: Arkray, Inc., Kyoto-shi, Kyoto 601-8045 (JP)
(72) Inventor: ARASHI, Kazumi, c/o ARKRAY, INC., Kyoto-shi, Kyoto 601-8045 (JP)
(74) Representative: Piésold, Alexander James
(86) International application number: PCT/JP2001/011442
(87) International publication number: WO 2002/052824

(56) References cited:
- EP-A- 0 768 788
- EP-A- 0 856 980
- WO-A-00/44159
- JP-A- 8 321 885
- JP-A- 11 098 252

## Description

### TECHNICAL FIELD

The present invention relates to a call center system that is capable of quickly transferring a telephone call of inquiry from a customer to an appropriate operator.

### BACKGROUND ART

Recently, a system called "computer telephony integration (CTI)", in which telephones and computers are integrated, is introduced into a call center.

In response to reception of a telephone call of inquiry from a customer, a CTI server identifies a telephone number of the customer using the originating number notifying function, acquires customer information registered in a database according to the telephone number thus identified, determines an operator who is to temporarily attend to the call by referring to engaged/disengaged states of operators and the like, and transfers the call thereto. When the temporarily attending operator receives the call, the CTI server immediately displays the customer's profile information, inquiry history regarding past inquiries, etc., on a screen in front of the operator. The operator responds to the call viewing the information on the screen.

Upon receiving the inquiry from the customer, the temporarily attending operator is allowed to search a database for past cases with the same contents as that of the inquiry. Therefore, even a less experienced operator can respond to inquiries from customers to some extent. In the case where the content of the inquiry is such that the temporarily attending operator is unable to deal with it, the call is transferred to a secondary responding operator who has more expertise so that the inquiry is answered.

Generally, a temporarily attending operator does not have sufficient expertise in many cases. In the case where an inquiry from a customer relates to breakdown of an equipment or the like, the customer is in a hurry mostly, and the transfer of the call to the secondary responding operator after the customer explained the inquiry to the temporarily attending operator, which causes the customer to repeat the same explanation, sometimes increases the customer's discontent.

EP 0768788 discloses a system in which an automatic call distributor automatically assigns a new caller to a preferred agent, based on geographic location or other quality, so that in future all calls from the user are directed to their preferred agent or, if the agent is unavailable, to the team to which the preferred agent belongs.

WO 00/44159 discloses a system through which IP users can be supplied with visual information concerning the agents available, their particular skills, whether the user has contacted an agent previously and the queue time. The user can then select which agent to call and has the option during the queuing period to try another agent or send a voice or text message to their chosen agent.

### DISCLOSURE OF THE INVENTION

To solve the above-described problems, it is an object of the present invention to provide a call center system that is capable of quickly transferring a telephone call of inquiry from a customer to an appropriate operator.

To achieve the foregoing object, the present invention provides
a call centre system for receiving an inquiry concerning a trouble occurring to equipment used in a facility of a user, the system comprising:
reception terminals of operators;
a call transfer device for transferring a received telephone call to one of the reception terminals; and
a user information storing device that stores user information regarding each user, and
an operator information storing device that stores operator competence information regarding areas of competence of each operator
wherein
the user information stored in the user information storing device includes, regarding each user,
a telephone number that the user uses,
usage history information regarding the usage of the call centre system by the user, and
equipment information regarding equipment used in a facility of the user,
and the usage history information including, regarding each user,
responding operator information used for identifying operators who have attended to the user in the past, and
information regarding contents of each call,
wherein in response to reception of a telephone call from a user, the call transfer device is arranged to identify the calling user, refer to the responding operator information included in the usage history information for that user, preferentially select an operator who has experience of attending to the user, and transfer the call to the operator and, in the case where the selected operator is not available for receiving the call, the call transfer device is further arranged to identify equipment used in the users facility according to the equipment information in the user information, refer to the operator information storing device, and preferentially transfer the call to an operator who has expertise in the equipment concerned.

With this system, when a user calls the call center, the call transfer device identifies the user, selects an operator who is to respond to the call according to the history information of the usage of the call center by the user, and transfers the call to the selected operator. In other words, since the user is attended to by an operator selected appropriately according to the user's usage history, the call is not transferred successively from one operator to another, which means that the user is not asked to make the same explanation repetitively and accomplishes his/her purpose quickly. Thus, a call center system is provided that is capable of quickly transferring a telephone call of inquiry from a customer to an appropriate operator.

To achieve the foregoing object, the present invention further provides
a call transfer method for transferring a telephone call from a user concerning a trouble occurring to equipment used in a facility of the user to a reception terminal of an operator in a call center, using a user information storing device that stores user information regarding each user that includes a telephone number that the user uses and usage history information regarding usage of the call by the user and equipment information regarding equipment used in a facility of the user and an operator information storing device that stores operator competence information regarding areas of competence of each operator, wherein the usage history information includes, regarding each user responding operator information used for identifying operators who have attended to the user in the past, and information regarding contents of each call, the method comprising the steps of:
receiving a call from a user;
identifying the user;
referring to the responding operator information included in the usage history information of the identified user, preferentially selecting an operator who has an experience of attending to the user; and transferring the call to the operator and in the case where the selected operator is not available for receiving the call, identifying equipment used in the user's facility according to the equipment information in the user information, referring to the operator information storing device, and preferentially transferring the call to an operator who has expertise in the equipment concerned.

By this method, a call center system is provided that is capable of quickly transferring a telephone call of inquiry from a customer to an appropriate operator.

### BRIEF DESCRIPTION OF DRAWINGS

FIG. 1 is a view illustrating a configuration of a call center system.
FIG. 2 is a view illustrating a configuration of a customer information database.

### DESCRIPTION OF THE INVENTION

The following will describe an embodiment of the present invention while referring to the drawings.

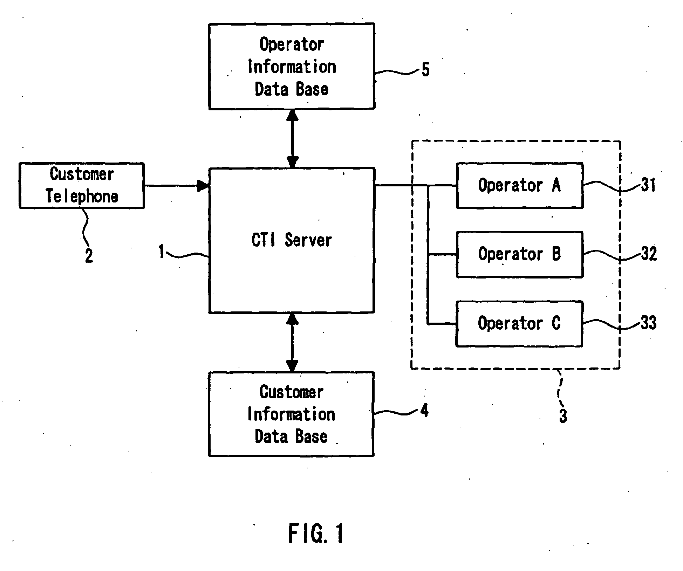

FIG. 1 is a block diagram illustrating a configuration of a call center system according to the present embodiment. In response to reception of a telephone call of inquiry from a customer telephone 2, a computer telephony integration (CTI) server 1 acquires a telephone number of the customer telephone 2 using an originating number notifying service provided by a telephone network. The CTI server 1 searches a customer information database 4 for information about the customer telephone 2 according to the telephone number of the customer telephone 2.

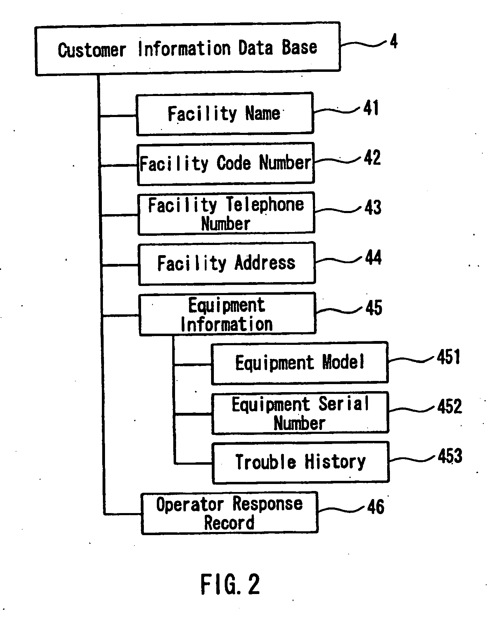

As shown in FIG. 2, the customer information database 4 stores, as information for each customer (customer information), facility name data 41, facility code number data 42, facility telephone number data 43, facility address data 44, equipment information data 45, and operator response record data 46. The operator response record data 46 are produced every time a telephone call of inquiry from a customer is received, and include date and time when the inquiry call was made, a name of an operator who responded to the call, and contents of the inquiry. The equipment information data 45 are composed of equipment model data 451, equipment serial number data 452, and trouble history data 453 that represent states of problems that occurred with equipment of the model concerned (the equipment model indicated by the equipment model data 451) in the past.

The CTI server 1 compares the telephone number of the customer telephone 2 with the facility telephone number data 43 in the customer information database 4, to identify the customer that has made the call. Then, referring to the operator response record data 46 of the identified customer, the CTI server 1 sorts names of operators who have responded to calls of inquiries from the foregoing customer by date of response in reverse chronological order, and selects the operator who has attended the customer latest as a candidate of a destination to which the call is transferred (call transfer destination candidate). Alternatively, the CTI server 1 may select an operator who has attended to the foregoing customer more times (more frequently) than the other operators have done preferentially as the call transfer destination candidate. For instance, in the case where an operator A shown in FIG. 1 is selected as the call transfer destination candidate, the CTI server 1 checks whether or not a reception terminal 31 of the operator A is in an accessible state, and if it is in an accessible state, the CTI server 1 transfers the inquiry call from the customer to the reception terminal 31 of the operator A.

In the case where the reception terminal 31 of the operator A is in an inaccessible state, the CTI server 1 identifies models of the equipment used in the facility of the customer by referring to the equipment model data 451 of the customer information database 4. Further, the CTI server 1 acquires the trouble histories of the equipment used in the facility of the customer by referring to the trouble history data 453, and specifies which model among those of the equipments shown in the equipment model data 451 tends to have troubles. Then, the CTI server 1 refers to an operator information database 5, and selects an operator who has expertise regarding the model specified as tending to have troubles. For instance, in the case where an operator B is selected, the CTI server 1 transfers the inquiry call from the customer telephone 2 to a reception terminal 32 of the operator B.

The operator responds to the inquiry from the customer, and registers the contents of the response in the customer information database 4. The customer information database 4 stores the contents thus registered by the operator as trouble history data 453, and further stores the date and time of the response, the name of the responding operator, and the contents of the inquiry, as operator response record data 46.

In the case where the operator judges that he/she is not sufficiently able to respond to the inquiry of the customer, the operator is allowed to search all the data of the customer information database 4 for response records with respect to past inquiries that had contents identical or similar to the contents of the foregoing inquiry from the customer, and to respond to the inquiry from the customer while having the searched results displayed on a screen of his/her reception terminal.

As described above, the present embodiment eliminates successive transfer of a call from a customer, and does not bother a customer for repetitive explanation. Therefore, the service level to customers is improved.

Furthermore, according to the present embodiment, in determining an operator to whom an inquiry call from a customer is to be transferred, the determination is made with the customer information being taken into consideration preferentially. For instance, the records of past responses by operators to a customer are referred to, and an operator who has experience in responding to inquiries from the customer is selected preferentially, to whom the call is transferred. In the case where the selected operator is not available for receiving the call, the equipment that the customer bought is identified from the equipment information among the items of the customer information, and the call is transferred preferentially to an operator who has expertise in the equipment concerned. By so doing, the customer is attended to by an operator who has attended to the customer or an operator who has expertise in the equipment concerned, without passing through temporary reception. Therefore, an effect of reducing customer's discontent can be achieved.

It should be noted that though the present embodiment is described with reference to a call center system for receiving inquiries regarding equipment, the present invention is not limited to this, but may be applied to call center systems relating to any articles or services.

Further, though in the present embodiment a telephone number of a customer telephone is acquired using the originating number notifying service provided by the telephone network and the customer is identified according to the acquired telephone number, the customer identification method is not limited to this, but any method can be applicable. For instance, a method of asking a customer to input information for identifying the customer (customer ID, customer's name, etc.) by button operations, voice input, etc., through the customer telephone 2 may be used.

### INDUSTRIAL APPLICABILITY

A call of inquiry from a customer is transferred directly to an operator who has attended to the customer in the past or an operator who has expertise in an equipment concerned, without passing through temporary reception. This makes it possible to provide a call center system that is capable of offering high-level service to customers.

## Claims

1. A call centre system for receiving an inquiry concerning a trouble occurring to equipment used in a facility of a user, the system comprising:
reception terminals of operators (3);
a call transfer device (1) for transferring a received telephone call to one of the reception terminals; and
a user information storing device (4) that stores user information regarding each user, and
an operator information storing device (5) that stores operator competence information regarding areas of competence of each operator
wherein
the user information stored in the user information storing device includes, regarding each user,
a telephone number that the user uses (43),
usage history information regarding the usage of the call centre system by the user, and
equipment information (45) regarding the equipment used in a facility of the user,
and the usage history information including, regarding each user,
responding operator information (46) used for identifying operators who have attended to the user in the past, and
information regarding contents of each call (453),
wherein in response to reception of a telephone call from a user, the call transfer device is arranged to identify the calling user, refer to the responding operator information included in the usage history information for that user, preferentially select an operator who has experience of attending to the user, and transfer the call to the operator and, in the case where the selected operator is not available for receiving the call, the call transfer device is further arranged to identify the equipment used in the users facility according to the equipment information in the user information, refer to the operator information storing device, and preferentially transfer the call to an operator who has expertise in the equipment concerned.

2. The call center system according to claim 1, wherein the user identification is carried out based on a telephone number used by the user (43) that is acquired by using an originating number notifying function provided by a telephone network.

3. The call center system according to claim 1 or 2, wherein
the call transfer device (1) is arranged to refer to the call history information and the responding operator information, and preferentially select an operator who has attended to the identified user latest.

4. The call center system according to claim 1 or 2, wherein
the call transfer device (1) is arranged to refer to the call history information and the responding operator information, and preferentially select an operator who has attended to the identified user most frequently.

5. A call transfer method for transferring a telephone call from a user concerning a trouble occurring to equipment used in a facility of the user to a reception terminal (31, 32, 33) of an operator in a call center, using a user information storing device (4) that stores user information regarding each user that includes a telephone number that the user uses (43) and usage history information regarding usage of the call by the user and equipment information (45) regarding the equipment used in a facility of the user and an operator information storing device (5) that stores operator competence information regarding areas of competence of each operator, wherein the usage history information includes, regarding each user, responding operator information (46) used for identifying operators who have attended to the user in the past, and information regarding contents of each call (453), the method comprising the steps of:
receiving a call from a user;
identifying the user;
referring to the responding operator information included in the usage history information of the identified user, preferentially selecting an operator who has an experience of attending to the user; and transferring the call to the operator and in the case where the selected operator is not available for receiving the call, identifying equipment used in the user's facility according to the equipment information in the user information, referring to the operator information storing device, and preferentially transferring the call to an operator who has expertise in the equipment concerned.

6. The call transfer method according to claim 5, wherein the user identification is carried out based on a telephone number used by the user (43) that is acquired by using an originating number notifying function provided by a telephone network.

## Patentansprüche

1. Anrufzentralensystem zum Empfangen einer Nachfrage hinsichtlich eines Problems, das bei Ausrüstung aufgetreten ist, die in einer Einrichtung eines Benutzers verwendet wird, mit:
Empfangsanschlüssen für Bediener (3),
einer Anruftransfervorrichtung (1) zum Transferieren eines empfangenen Telefonanrufs zu einem der Empfangsanschlüsse, und
einer Benutzerinformationsspeichervorrichtung (4), die Benutzerinformation hinsichtlich eines jeden Benutzers speichert, und
einer Bedienerinformationsspeichervorrichtung (5), die Bedienerkompetenzinformation hinsichtlich von Kompetenzbereichen eines jeden Bedieners speichert,
wobei
die Benutzerinformation, die in der Benutzerinformationsspeichervorrichtung gespeichert ist, hinsichtlich eines jeden Benutzers umfasst:
eine Telefonnummer, die der Benutzer benutzt (43).
Benutzungsablaufinformation hinsichtlich der Benutzung des Anrufzentralensystems durch den Benutzer und
Ausrüstungsinformation (45) hinsichtlich der Ausrüstung, die in einer Einrichtung des Benutzers verwendet wird,
und wobei die Benutzungsablaufinformation hinsichtlich eines jeden Benutzers umfasst:
Information (46) zu antwortenden Bedienern, die zum Identifizieren von Bedienern verwendet wird, die den Benutzer in der Vergangenheit betreut haben, und
Information hinsichtlich von Inhalten eines jeden Anrufs (453).
wobei die Anruftransfervorrichtung ausgestaltet ist, in Antwort auf einen Empfang eines Telefonanrufs von einem Benutzer den anrufenden Benutzer zu identifizieren, auf die Information zu beantwortenden Bedienern Bezug zu nehmen, die in der Benutzungsablaufinformation für diesen User enthalten ist, einen Bediener bevorzugt auszuwählen, der Erfahrung hinsichtlich der Betreuung dieses Benutzers hat, und den Anruf zu dem Bediener zu transferieren, und
wobei, in dem Fall, in dem der ausgewählte Bediener nicht dafür zur Verfügung steht, den Anruf zu empfangen, die Anruftransfervorrichtung ferner ausgestaltet ist, gemäß der Ausrüstungsinformation in der Benutzerinformation die Ausrüstung zu identifizieren, die in der Einrichtung des Benutzers verwendet wird, auf die Bedienerinformationsspeichervorrichtung Bezug zu nehmen und den Anruf bevorzugt zu einem Bediener zu transferieren, der Expertise hinsichtlich der betreffenden Ausrüstung besitzt.

2. Anrufzentralensystem nach Anspruch 1,
wobei die Benutzeridentifikation auf Basis einer Telefonnummer ausgeführt wird, die von dem Benutzer (43) verwendet wird und die durch Verwendung einer Ausgangsnummernnotifizierungsfunktion beschafft wird, die von einem Telefonnetz bereitgestellt wird.

3. Anrufzentralensystem nach Anspruch 1 oder 2, wobei
die Anruftransfervorrichtung (1) ausgestaltet ist, auf die Anrufablaufinformation und die Information zu beantwortenden Bedienern Bezug zu nehmen und bevorzugt einen Bediener auszuwählen, der als letzter den identifizierten Benutzer betreut hat.

4. Anrufzentralensystem nach Anspruch 1 oder 2, wobei
die Anruftransfervorrichtung (1) ausgestaltet ist, auf die Anrufablaufinformation und die Information zu beantwortenden Bedienern Bezug zu nehmen und bevorzugt einen Bediener auszuwählen, der den identifizierten Benutzer am häufigsten betreut hat.

5. Anruftransferverfahren zum Transferieren eines Telefonanrufs von einem Benutzer hinsichtlich eines Problems, das bei Ausrüstung aufgetreten ist, die in einer Einrichtung des Benutzers verwendet wird, an einen Empfangsanschluss (31, 32, 33) eines Bedieners in einer Anrufzentrale, unter Verwendung einer Benutzerinformationsspeichervorrichtung (4), die Benutzerinformation hinsichtlich eines jeden Benutzers speichert, die eine Telefonnummer, die der Benutzer verwendet (43), und Benutzungsablaufinformation hinsichtlich der Benutzung des Anrufs durch den Benutzer und Ausrüstungsinformation (45) hinsichtlich der Ausrüstung, die in der Einrichtung des Benutzers verwendet wird, umfasst, und einer Bedienerinformationsspeichervorrichtung (5), die Bedienerkompetenzinformation hinsichtlich Kompetenzbereichen eines jeden Bedieners speichert, wobei die Benutzungsablaufsinformation hinsichtlich eines jeden Benutzers umfasst: Information zu beantwortenden Bedienern (46), die zum Identifizieren von Bedienern verwendet wird, die in der Vergangenheit den Benutzer betreut haben, und Information hinsichtlich von Inhalten eines jeden Anrufs (453), wobei das Verfahren die Schritte aufweist:
Empfangen eines Anrufs von einem Benutzer,
Identifizieren des Benutzers,
Bezugnehmen auf die Information zu beantwortenden Bedienern, die in der Benutzungsablaufsinformation des identifizierten Benutzers enthalten ist, bevorzugtes Auswählen eines Bedieners, der Erfahrung hinsichtlich der Betreuung des Benutzers aufweist, und Transferieren des Anrufs zu dem Bediener, und, in dem Fall, in dem der ausgewählte Bediener nicht dafür zur Verfügung steht, den Anruf zu empfangen, Identifizieren der Ausrüstung, die in der Einrichtung des Benutzers verwendet wird, gemäß der Ausrüstungsinformation in der Benutzerinformation, Bezugnehmen auf die Bedienerinformationsspeichervorrichtung und bevorzugtes Transferieren des Anrufs zu einem Bediener, der Expertise hinsichtlich der betreffenden Ausrüstung besitzt.

6. Anruftransferverfahren nach Anspruch 5,
wobei die Benutzeridentifikation auf Basis einer Telefonnummer durchgeführt wird, die von dem Benutzer (43) verwendet wird und die unter Verwendung einer Ausgangsnummemnotifizierungsfunktion beschafft wird, die von einem Telefonnetz bereitgestellt wird.

## Revendications

1. Système de centre d'appels recevant une interrogation au sujet d'un incident survenant à un matériel utilisé dans une installation d'un utilisateur, le système comprenant :
des terminaux de réception d'opérateurs (3) ;
un dispositif de transfert d'appels (1) transférant un appel téléphonique reçu à l'un des terminaux de réception ; et
un dispositif de stockage d'informations d'utilisateur (4) qui stocke des informations d'utilisateur concernant chaque utilisateur, et
un dispositif de stockage d'informations d'opérateur (5) qui stocke des informations de compétence d'opérateur concernant des domaines de compétence de chaque opérateur
dans lequel
les informations d'utilisateur stockées dans le dispositif de stockage d'informations d'utilisateur incluent, en ce qui concerne chaque utilisateur,
un numéro de téléphone que l'utilisateur (43) utilise,
des informations d'historique d'utilisation concernant l'utilisation du système de centre d'appels par l'utilisateur, et
des informations de matériel (45) concernant le matériel utilisé dans une installation de l'utilisateur,
et les informations d'historique d'utilisation comprenant, en ce qui concerne chaque utilisateur,
des informations d'opérateur répondant (46) utilisées pour l'identification des opérateurs qui ont servi l'utilisateur par le passé, et
des informations concernant le contenu de chaque appel (453),
dans lequel, en réponse à la réception d'un appel téléphonique en provenance d'un utilisateur, le dispositif de transfert d'appels est configuré pour identifier l'utilisateur appelant, pour se référer à des informations d'opérateur répondant comprises dans les informations d'historique d'utilisation pour cet utilisateur, pour sélectionner de manière préférentielle un opérateur qui bénéficie d'une expérience de prise en charge de l'utilisateur, et pour transférer l'appel à l'opérateur et, dans le cas où l'opérateur sélectionné n'est pas disponible pour recevoir l'appel, le dispositif de transfert d'appels est en outre configuré pour identifier le matériel utilisé dans l'installation de l'utilisateur selon les informations de matériel présentes dans les informations d'utilisateur, pour se référer au dispositif de stockage d'informations d'opérateur, et pour transférer de manière préférentielle l'appel à un opérateur qui possède une compétence au regard du matériel concerné.

2. Système de centre d'appels selon la revendication 1, dans lequel l'identification de l'utilisateur est réalisée sur la base d'un numéro de téléphone utilisé par l'utilisateur (43), qui est obtenu en utilisant une fonction d'identification du numéro d'appel fournie par un réseau téléphonique.

3. Système de centre d'appels selon la revendication 1 ou la revendication 2, dans lequel
le dispositif de transfert d'appels (1) est configuré pour se référer aux informations d'historique d'appel et aux informations d'opérateur répondant, et pour sélectionner de manière préférentielle un opérateur qui a servi l'utilisateur identifié le dernier.

4. Système de centre d'appels selon la revendication 1 ou la revendication 2, dans lequel
le dispositif de transfert d'appels (1) est configuré pour se référer aux informations d'historique d'appel et aux informations d'opérateur répondant, et pour sélectionner de manière préférentielle un opérateur qui a servi l'utilisateur identifié le plus fréquemment.

5. Procédé de transfert d'appels transférant un appel téléphonique en provenance d'un utilisateur, au sujet d'un incident survenant à un matériel utilisé dans une installation de l'utilisateur, à un terminal de réception (31, 32, 33) d'un opérateur dans un centre d'appels, en utilisant un dispositif de stockage d'informations d'utilisateur (4) qui stocke des informations d'utilisateur concernant chaque utilisateur, qui comprennent un numéro de téléphone que l'utilisateur (43) utilise et des informations d'historique d'utilisation concernant l'utilisation de l'appel par l'utilisateur et des informations de matériel (45) concernant le matériel utilisé dans une installation de l'utilisateur, et un dispositif de stockage d'informations d'opérateur (5) qui stocke des informations de compétence d'opérateur concernant des domaines de compétence de chaque opérateur, dans lequel les informations d'historique d'utilisation incluent, en ce qui concerne chaque utilisateur, des informations d'opérateur répondant (46) utilisées pour identifier des opérateurs qui ont servi l'utilisateur par le passé, et des informations concernant le contenu de chaque appel (453), le procédé comprenant les étapes consistant :
à recevoir un appel en provenance d'un utilisateur ;
à identifier l'utilisateur ;
à se référer aux informations d'opérateur répondant comprises dans les informations d'historique d'utilisation de l'utilisateur identifié, à sélectionner de manière préférentielle un opérateur qui bénéficie d'une expérience de prise en charge de l'utilisateur ; et à transférer l'appel à l'opérateur et, dans le cas où l'opérateur sélectionné n'est pas disponible pour recevoir l'appel, à identifier le matériel utilisé dans l'installation de l'utilisateur selon les informations de matériel présentes dans les informations d'utilisateur, à se référer au dispositif de stockage d'informations d'opérateur, et à transférer de manière préférentielle l'appel à un opérateur qui possède une compétence au regard du matériel concerné.

6. Procédé de transfert d'appels selon la revendication 5, dans lequel l'identification de l'utilisateur est réalisée sur la base d'un numéro de téléphone utilisé par l'utilisateur (43), qui est obtenu en utilisant une fonction d'identification du numéro d'appel fournie par un réseau téléphonique.
